# FASCICULE DE BREVET EUROPEEN

(11) **EP 1 392 483 B1**
(45) Date de publication et mention de la délivrance du brevet: **11.04.2007**
(21) Numéro de dépôt: 02745500.5
(22) Date de dépôt: 07.06.2002
(51) Int. Cl.: B29C 33/26, B29C 33/36, B29C 49/56

(54) **SYSTEME D'ACTIONNEMENT D'UN MOULE EN DEUX PARTIES FORMANT DEUX DEMI-MOULES ARTICULES ENTRE EUX**
BETÄTIGUNGSSYSTEM FÜR EIN AUS ZWEI MITEINANDER GELENKIG VERBUNDENEN HALBSCHALEN BESTEHENDES FORMWERKZEUG
SYSTEM FOR ACTUATING A TWO-PART MOULD FORMING TWO MUTUALLY ARTICULATED HALF-MOULDS

(30) Priorité: 08.06.2001 FR 0107514
(43) Date de publication de la demande: 03.03.2004
(73) Titulaire: ADS, 95310 Saint Ouen l'Aumône (FR)
(72) Inventeur: MUE, Claude, F-95540 Mery-sur-oise (FR); TRASSARD, Patrick, F-95100 Argenteuil (FR); DORIN, Luc, F-76210 Bolleville (FR)
(74) Mandataire: Chambon, Gérard
(86) Numéro de dépôt international: PCT/FR2002/001957
(87) Numéro de publication internationale: WO 2002/100622

(56) Documents cités:
- FR-A- 2 035 405
- FR-A- 2 059 446
- FR-A- 2 088 523
- FR-A- 2 170 075
- FR-A- 2 653 058
- FR-A- 2 793 722

## Description

L'invention concerne un système d'actionnement d'un moule en deux parties formant deux demi-moules articulés autour d'un axe formant charnière.

Il est connu de réaliser des moules en deux parties ou demi-moules, notamment dans les machines de moulage par injection ou par soufflage.

Généralement, les deux demi-moules sont montés chacun sur un chariot et sont mus l'un vers l'autre en restant parallèles l'un par rapport à l'autre.

On connaît aussi depuis longtemps, comme décrits notamment dans les brevets Français 2 059 446 et 2 088 523, ou encore dans la demande FR-2 793 722, des systèmes dans lesquels les demi-moules sont articulés autour d'un axe formant charnière et qui sont commandés, entre une position d'ouverture et une position de fermeture, par un chariot translatif mû dans un mouvement de va-et-vient.

L'invention concerne un système d'actionnement d'un moule en deux parties formant deux demi-moules du dernier type précité, mais qui est remarquable en ce que chaque demi-moule est en outre articulé sur une pièce qui pivote autour d'un axe et qui est mue en rotation par au moins une bielle d'actionnement articulée par ses extrémités respectivement à ladite pièce pivotante et audit chariot translatif.

Selon un mode de réalisation, chaque demi-moule est articulé sur la pièce pivotante au moyen d'au moins une bielle de liaison, tandis que les bielles d'actionnement des pièces pivotantes des demi-moules sont articulées sur un chariot translatif commun et plus particulièrement dans ce dernier cas, le chariot translatif est par exemple constitué par une traverse qui est montée coulissante sur au moins deux rails et sur laquelle sont articulées les bielles d'actionnement.

De préférence, le chariot translatif est mû en va-et-vient par au moins un galet qui coopère avec une came et par exemple, le galet est disposé sur une bielle montée pivotante autour d'un axe fixe par rapport aux axes de pivotement des pièces pivotantes d'actionnement des demi-moules.

Avantageusement, en position refermée des demi-moules, les axes longitudinaux des bielles de liaison aménagées entre lesdits demi-moules et les pièces pivotantes, sont sensiblement alignés sur une ligne reliant les axes de pivotement desdites pièces-pivotantes.

Grâce à une telle disposition, en position de fermeture les demi-moules sont naturellement verrouillés entre eux sans autre moyen complémentaire.

L'invention concerne aussi un ensemble de moules pourvus chacun d'un système d'actionnement tel que précité, cet ensemble étant remarquable en ce que les moules sont disposés en cercle ou en arc de cercle et en ce que les chariots translatifs sont mus par des galets qui coopèrent avec une came commune, lesdits moules étant en mouvement relatif par rapport à la came.

Selon un mode de réalisation, les moules sont fixés sur un élément qui tourne autour de la came commune qui est fixe en position mais on pourrait aussi imaginer des moules fixes et une came mue selon un mouvement rotatif.

L'invention sera bien comprise à la lecture de la description qui va suivre et qui se réfère aux dessins annexés dans lesquels :
- les figures 1 et 2 montrent en perspective un système selon l'invention, le moule étant représenté dans des positions respectivement ouverte et fermée ;
- les figures 3 et 4 représentent en vue de dessus les systèmes des figures respectivement 1 et 2 avec en outre représentée en partie la came d'actionnement ;
- la figure 5 est une vue de dessus d'un ensemble de plusieurs moules munis chacun d'un système d'actionnement commandé par une came commune.

Comme le montrent bien les dessins, le système selon l'invention est destiné à actionner un moule 1 en deux parties formant deux demi-moules 1',1" articulés entre eux autour d'un axe 2 formant charnière.

Chaque demi-moule 1', 1" est articulé par l'intermédiaire d'une bielle de liaison 3a, 3b sur une pièce 4a, 4b qui est montée pivotante autour d'un axe 5a, 5b.

Les pièces pivotantes 4a, 4b sont mues en rotation chacune par une bielle d'actionnement 6a, 6b articulée par ses extrémités respectivement à ladite pièce 4a, 4b et à un chariot translatif 7.

Le chariot 7 est constitué par une traverse qui est montée coulissante sur deux rails 8a, 8b et sur laquelle est articulée l'une des extrémités des bielles d'actionnement 6a, 6b.

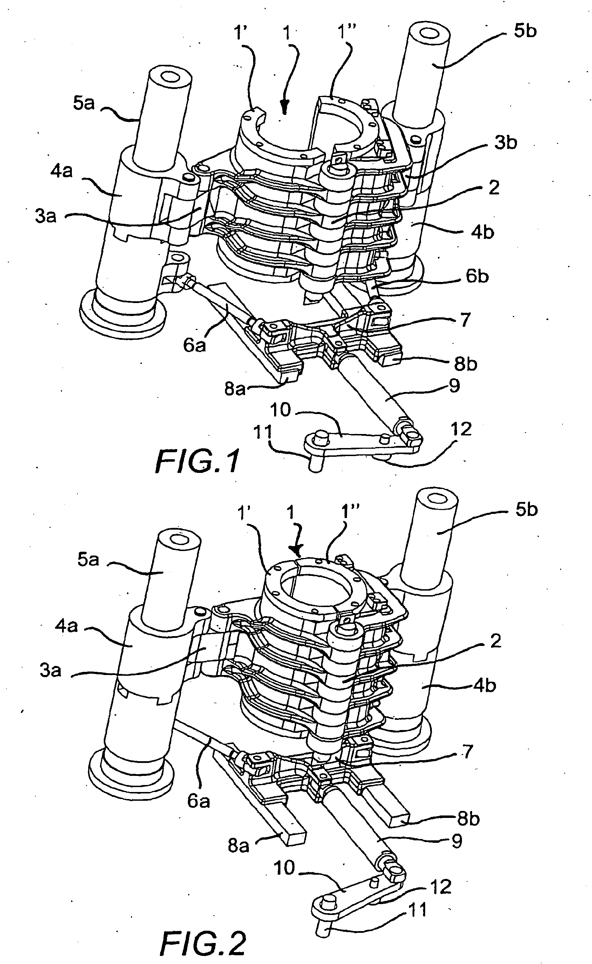

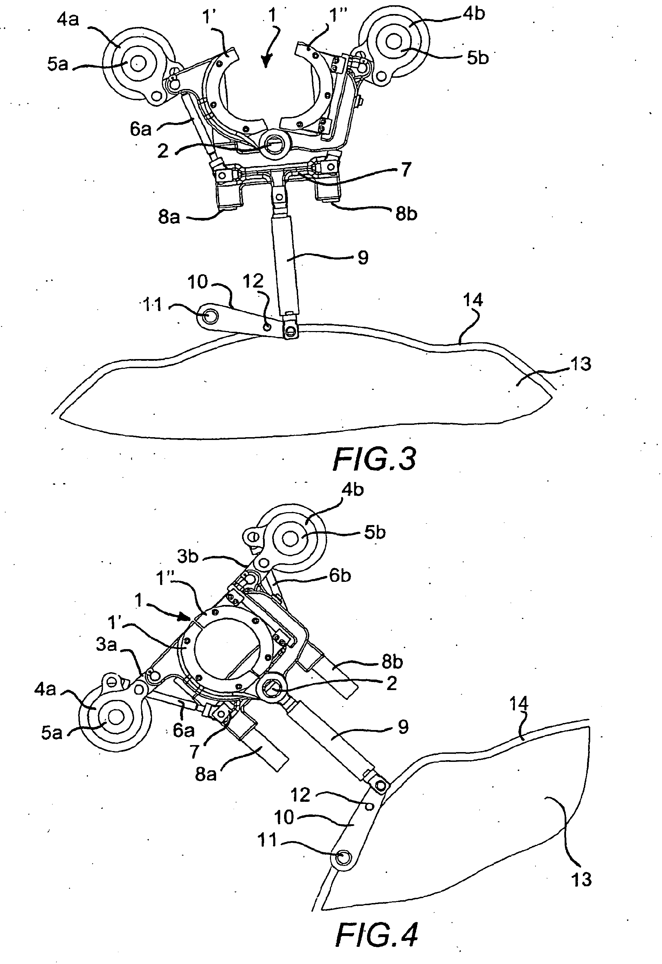

De la sorte, on comprend qu'avec un mouvement de va-et-vient du chariot 7, on passe de la position ouverte des figures 1 et 3 à la position fermée des figures 2 et 4 et réciproquement.

En effet, une translation du chariot 7 entraîne au moyen des bielles 6a, 6b, le pivotement des pièces 4a, 4b et ainsi la fermeture ou l'ouverture des moules par l'action des bielles de liaison 3a, 3b sur les demi-moules 1', 1", les axes de pivotement 2, 5a et 5b étant fixes par rapport au mouvement du chariot 7.

Pour actionner le chariot 7, on a prévu une tige 9 de poussée et de traction articulée, d'une part audit chariot et d'autre part, à une bielle 10 qui est montée pivotante autour d'un axe 11 et qui est munie d'un galet 12, l'axe 11 étant fixe par rapport aux axes 5a, 5b de pivotement des pièces 4a, 4b.

Le galet 12 est destiné à coopérer avec une came 13 représentée en partie sur les figures 3 et 4.

Selon la position du galet 12 sur la came 13, on comprend que le moule peut être ouvert (figure 3), ou fermé (figure 4), le galet suivant le chemin représenté en 14 sur les figures 3 et 4.

Le galet 12 et la came 13 doivent avoir un mouvement relatif entre eux. La came 13 est par exemple en mouvement par rapport au support du moule 1 constitué par les axes 5a, 5b et 2 qui sont alors fixes, ou respectivement et plus particulièrement l'ensemble du moule et de son système d'actionnement est en mouvement par rapport à la came 13 alors fixe.

Comme le montrent en particulier les figures 2 et 4, en position refermée, les axes longitudinaux des bielles de liaison 3a, 3b sont sensiblement alignés sur une ligne reliant les axes de pivotement 5a, 5b des pièces pivotantes 4a, 4b, ou encore lesdits axes 5a, 5b sont sensiblement dans le même plan que le plan contenant les axes d'articulation des bielles de liaison 3a, 3b.

En fait, dans cette position, les axes d'articulation des bielles de liaison 3a, 3b avec les pièces pivotantes 4a, 4b peuvent être légèrement au-delà de la ligne reliant les axes de pivotement 5a, 5b.

De la sorte, le moule est non seulement maintenu verrouillé par la pression exercée par le chariot mais aussi par la géométrie même du système qui s'oppose à une ouverture sans un recul volontaire du chariot 7.

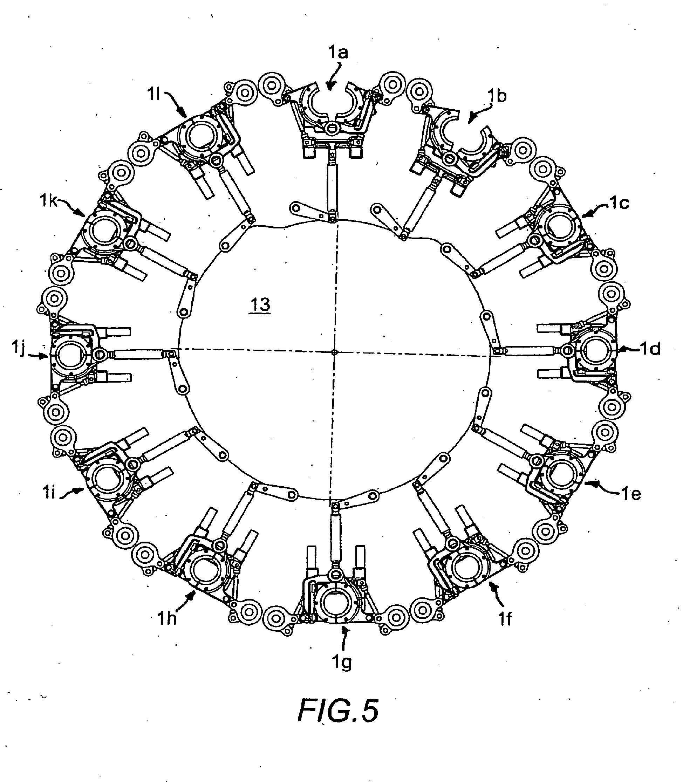

Sur la figure 5, on a représenté un ensemble de douze moules 1a à 11 munis chacun d'un système d'actionnement tel que décrit à propos des figures 1 à 4, cet ensemble étant destiné, par exemple, à fabriquer des corps creux telles des bouteilles, par soufflage, à partir de préformes thermoplastiques.

Les moules 1 a à 1l sont disposés comme le montre la figure 5, selon un cercle au centre duquel est aménagée une came commune 13 disposée ici fixement.

Les axes de pivotement précédemment décrits et référencés 2, 5a, 5b, de même que les axes de pivotement 11 des bielles 10, comme bien sûr les rails 8a, 8b sur lesquels sont mus les chariots 7, sont disposés de manière fixe, par exemple sur un plateau non représenté, plateau qui est mobile en rotation par rapport à la came 13 (bien que l'on puisse bien sûr imaginer, comme déjà dit, une came mobile et des moules fixes).

La forme de la came est étudiée et choisie pour qu'un ou plusieurs moules s'ouvrent (1a, 1b) ou se ferment (1c à 11) comme le montre ladite figure 5, en fonction de la position angulaire de la came 13.

## Revendications

1. Système d'actionnement d'un moule (1) en deux parties formant deux demi-moules (1',1") articulés entre eux autour d'un axe (2) formant charnière et commandés, entre une position d'ouverture et une position de fermeture, par un chariot translatif (7) mû dans un mouvement de va-et-vient, système ***caractérisé* en ce que** chaque demi-moule (1',1") est en outre articulé sur une pièce (4a,4b) qui pivote autour d'un axe (5a,5b) et qui est mue en rotation par au moins une bielle d'actionnement (6a,6b) articulée par ses extrémités respectivement à ladite pièce pivotante (4a,4b) et audit chariot translatif (7).

2. Système d'actionnement selon la revendication 1, ***caractérisé* en ce que** chaque demi-moule (1',1") est articulé sur la pièce pivotante (4a,4b) au moyen d'au moins une bielle de liaison (3a,3b).

3. Système d'actionnement selon l'une des revendications 1 et 2, ***caractérisé* en ce que** les bielles d'actionnement (6a,6b) des pièces pivotantes (4a,4b) des demi-moules (1',1") sont articulées sur un chariot translatif commun (7).

4. Système d'actionnement selon la revendication 3, ***caractérisé* en ce que** le chariot translatif (7) est constitué par une traverse qui est montée coulissante sur au moins deux rails (8a,8b) et sur laquelle sont articulées les bielles d'actionnement (6a,6b).

5. Système d'actionnement selon l'une des revendications 1 à 4, ***caractérisé* en ce que** le chariot translatif (7) est mû en va-et-vient par au moins un galet (12) qui coopère avec une came (13).

6. Système d'actionnement selon la revendication 5, ***caractérisé* en ce que** le galet (12) est disposé sur une bielle (10) montée pivotante autour d'un axe (11) fixe par rapport aux axes de pivotement (5a,5b) dés pièces pivotantes (4a,4b) d'actionnement des demi-moules (1',1").

7. Système d'actionnement selon l'une des revendications 2 à 6, ***caractérisé* en ce qu'**en position refermée des demi-moules (1',1"), les axes longitudinaux des bielles de liaison (3a,3b) aménagées entre lesdits demi-moules (1',1") et les pièces pivotantes (4a,4b), sont sensiblement alignés sur une ligne reliant les axes de pivotement (5a,5b) desdites pièces pivotantes (4a,4b).

8. Ensemble de moules (1a, 1l) constitués chacun de deux demi-moules articulés autour d'un axe formant charnière et pourvus chacun d'un système d'actionnement selon l'une des revendications 1 à 7, ***caractérisé* en ce que** les moules (1a, 1l) sont disposés en cercle ou en arc de cercle et **en ce que** les chariots translatifs sont mus par des galets qui coopèrent avec une came commune (13), lesdits moules étant en mouvement relatif par rapport à la came (13).

9. Ensemble de moules selon la revendication 8, ***caractérisé* en ce que** les moules (1a, 1l) sont fixés sur un élément qui tourne autour de la came commune (13) qui est fixe en position.

## Claims

1. Actuating system for a mould (1) in two parts forming two half moulds (1', 1") mutually articulated about a shaft (2) forming a hinge and driven between an open position and a closed position by a translatory carriage (7) moved with a reciprocating movement, said system being **characterised in that** each half mould (1', 1") is also articulated on a part (4a, 4b) which pivots about a shaft (5a, 5b) and which is moved in rotation by at least one actuating rod (6a, 6b) articulated by its ends respectively to said pivoting part (4a, 4b) and to said translatory carriage (7).

2. Actuating system according to claim 1, **characterised in that** each half mould (1', 1") is articulated on the pivoting part (4a, 4b) by means of at least one link rod (3a, 3b).

3. Actuating system according to one of claims 1 and 2, **characterised in that** the actuating rods (6a, 6b) of the pivoting parts (4a, 4b) of the half moulds (1', 1") are articulated on a common translatory carriage (7).

4. Actuating system according to claim 3, **characterised in that** the translatory carriage (7) is constituted by a crosspiece which is mounted slidingly on at least two rails (8a, 8b) and on which are articulated the actuating rods (6a, 6b).

5. Actuating system according to one of claims 1 to 4, **characterised in that** the translatory carriage (7) is moved with a reciprocating movement by at least one roller (12) which co-operates with a cam (13).

6. Actuating system according to claim 5, **characterised in that** the roller (12) is disposed on a rod (10) mounted so as to pivot about a shaft (11) which is fixed in relation to the pivoting shafts (5a, 5b) of the pivoting parts (4a, 4b) actuating the half moulds (1', 1").

7. Actuating system according to one of claims 2 to 6, **characterised in that** in the closed position of the half moulds (1', 1"), the longitudinal axes of the link rods (3a, 3b) arranged between said half moulds (1', 1") and the pivoting parts (4a, 4b) are substantially aligned on a line linking the pivoting shafts (5a, 5b) of said pivoting parts (4a, 4b).

8. Set of moulds (1a, 1l) each constituted by two half moulds articulated about a shaft forming a hinge and each provided with an actuating system according to one of claims 1 to 7, **characterised in that** the moulds (1a, 1l) are disposed in a circle or in an arc of a circle and **in that** the translatory carriages are moved by rollers which co-operate with a common cam (13), said moulds being in relative movement in relation to the cam (13).

9. Set of moulds according to claim 8, **characterised in that** the moulds (1a, 1l) are fixed on an element which turns about the common cam (13) which is fixed in position.

## Patentansprüche

1. Betätigungssystem für eine Form (1) aus zwei Teilen, zwei Halbformen (1', 1 ") bildend, untereinander um eine Achse (2), die ein Drehgelenk bildet, gelenkig und angetrieben, zwischen einer Öffnungsposition und einer Schließposition, durch ein Verschiebelaufwerk (7) in eine Hin- und Herbewegung versetzt, welches System **dadurch gekennzeichnet ist, dass** jede Halbform (1', 1 ") außerdem auf einem Teilstück (4a, 4b), das sich um eine Achse (5a, 5b) dreht und das durch zumindest ein Betätigungsglied (6a, 6b) in Bewegung gesetzt wird, gelenkig ist, angelenkt an seinen Enden an dem sich drehenden Teilstück (4a, 4b) und an dem Verschiebelaufwerk (7).

2. Betätigungssystem nach Anspruch 1, **dadurch gekennzeichnet, dass** jede Halbform (1', 1") auf dem drehbaren Teilstück (4a, 4b) mittels zumindest eines Verbindungsglieds (3a, 3b) drehbar ist.

3. Betätigungssystem nach einem der Ansprüche 1 oder 2, **dadurch gekennzeichnet, dass** die Betätigungsglieder (6a, 6b) der drehbaren Teilstücke (4a, 4b) der Halbformen (1', 1") auf einem gemeinsamen Verschiebelaufwerk (7) gelenkig sind.

4. Betätigungssystem nach Anspruch 3, **dadurch gekennzeichnet, dass** das Verschiebelaufwerk (7) durch eine Traverse gebildet ist, die auf zumindest zwei Schienen (8a, 8b) verschiebbar befestigt ist und auf der die Betätigungsglieder (6a, 6b) drehbar gelagert sind.

5. Betätigungssystem nach einem der Ansprüche 1 bis 4, **dadurch gekennzeichnet, dass** das Verschiebelaufwerk (7) in einer Hin- und Herbewegung durch zumindest eine Laufrolle (12) beweglich ist, die mit einer Kurvenscheibe (13) zusammenwirkt.

6. Betätigungssysteme nach Anspruch 5, **dadurch gekennzeichnet, dass** die Laufrolle (12) auf einem Zwischenglied (10) angeordnet ist, drehbar um eine Achse (11) und fest in Bezug auf die Drehachsen (5a, 5b) der drehbaren Teilstücke (4a, 4b) für eine Betätigung der Halbschalen (1', 1") angebracht ist.

7. Betätigungssystem nach einem der Ansprüche 2 bis 6, **dadurch gekennzeichnet, dass** in einer wieder schließenden Position der Halbschalen (1', 1 ") die Längsachsen der Verbindungsglieder (3a, 3b), die zwischen den Halbschalen (1', 1") und den drehbaren Teilstücke (4a, 4b) angeordnet sind, etwa auf einer Linie ausgerichtet sind, die die Drehachsen (5a, 5b) der drehbaren Teilstücken (4a, 4b) miteinander verbindet.

8. Formensatz (1a, 1l),von denen jede aus zwei Halbformen aufgebaut ist, drehbar um eine Achse, die ein Drehgelenk bildet, und jede versehen ist mit einem Betätigungssystem nach einem der Ansprüche 1 bis 7, **dadurch gekennzeichnet, dass** die Formen (1a, 1l) in einem Kreis oder einem Kreisbogen angeordnet sind und **dadurch**, dass die Verschiebelaufwerke durch Laufrollen beweglich sind, die mit einer gemeinsamen Kurvenscheibe (13) zusammenwirken, wobei die Formen relativ zu der Kurvenscheibe (13) beweglich sind.

9. Formensatz nach Anspruch 8, **dadurch gekennzeichnet, dass** die Formen (1a, 1l) auf einem Element befestigt sind, das sich um die gemeinsame Kurvenscheibe (13) dreht, die in ihrer Position feststehend ist.
